# EUROPEAN PATENT SPECIFICATION

(11) **EP 2 104 810 B1**
(45) Date of publication and mention of the grant of the patent: **06.07.2016**
(21) Application number: 07702586.4
(22) Date of filing: 04.01.2007
(51) Int. Cl.: F25B 49/02, F25B 41/06

(54) **SUPERHEAT CONTROL FOR REFRIGERATION CIRCUIT**
ÜBERHITZUNGSREGELUNG FÜR EINEN KÄLTEKREISLAUF
CONTRÔLE DE SURCHAUFFE POUR CIRCUIT DE RÉFRIGÉRATION

(43) Date of publication of application: 30.09.2009
(73) Proprietor: Carrier Corporation, Farmington, CT 06034-4015 (US)
(72) Inventor: HEINBOKEL, Bernd, 50999 Köln (DE)
(74) Representative: Waibel, Stefan Christopher
(86) International application number: PCT/EP2007/000047
(87) International publication number: WO 2008/080436

(56) References cited:
- EP-A- 1 355 207
- EP-A2- 0 692 683
- WO-A-96/06316
- DE-A1- 4 100 749
- GB-A- 2 203 865
- JP-A- 2 133 760
- JP-A- 2 230 055
- JP-A- 3 271 656
- JP-A- 5 133 620
- JP-A- 5 262 127
- JP-A- 7 027 396
- JP-A- 7 103 579
- JP-A- 60 185 075
- JP-A- 2005 282 939
- US-A- 2 196 777
- US-A- 2 475 556
- US-A- 2 511 565
- US-A- 4 685 309
- US-A- 5 187 944
- US-A- 5 877 476
- CHEN W ET AL: "Experimental investigation of a minimum stable superheat control system of an evaporator" INTERNATIONAL JOURNAL OF REFRIGERATION, OXFORD, GB, vol. 25, no. 8, December 2002 (2002-12), pages 1137-1142, XP004388595 ISSN: 0140-7007

## Description

The present invention relates to a method for controlling superheat of the refrigerant leaving an evaporator of a refrigeration circuit as well as a corresponding refrigeration circuit.

The control of the superheat at the exit of the evaporator is essential for the refrigeration circuit's efficiency and workability. If the superheat is not sufficient, small droplets will still be present in the steam leaving the evaporator and correspondingly in the suction gas entering into the compressor. The presence of liquid in the suction gas and the compressor is detrimental to functioning of the compressor and might even result in damage to the compressor. A to high superheat setting is also undesirable since it will result in a less than optimum filling of the evaporator and reduced evaporator efficiency. Accordingly, the power consumption of the refrigeration circuit will be higher than what is actually needed.

Frequently, a constant setting of the superheat is chosen for a particular application. In accordance with the above given explanation for the superheat, it is clear that in case of a constant setting the superheat has to be chosen so that the suction gas temperature is well above the evaporation temperature thereof for all possible operating conditions. However, the optimum superheat, i.e. the optimum difference of the refrigerant exit temperature and the refrigerant evaporation temperature, depends on the type of the evaporator and its heat load, i.e. as to whether the evaporator is working at partial or full load. Accordingly, for most of the operational conditions the efficiency of the refrigeration circuit is clearly less than optimum. Practically, in most operation conditions, the evaporation temperature is much lower than necessary which results in a less than optimum heat transfer and corresponding high energy consumption.

Accordingly, attempts have been made to control the superheat based on the actual system conditions. There exists, for example, the MSS control (MSS - minimum stable signal) which takes advantage of a further effect, that i.e. instability due to oscillations in the system, which occur when the superheat becomes to low. Beginning with a predetermined maximum superheat, the control decreases the superheat until the systems starts to oscillate. Than the control increases temperature again and subsequently starts again to reduce the superheat until finally the system remains in a stable control condition at the lowest controllable superheat value. With the refrigeration circuit in a steady-state operation, it takes about 20 to 30 minutes for the MSS control to reach the minimum controllable superheat. Practically, however, the refrigeration circuit is not working in a steady state mode. Instead, the refrigeration circuit continuously monitors its operational conditions and directs any changes in the systems mode, for example switching individual compressors on and off, switching individual cold consumers on and off, etc. After each such change of the operating condition, the MSS control starts its iterations again as mentioned above. Since the frequency of changes in the system is typically much shorter than the average regulating time of the MSS control, the superheat in the refrigeration circuit is on average still substantially higher than what would be optimum.

EP 1 355 207 A1 shows a method for operating a compression cooling device in particular for cooling rooms with a cooling circuit comprising an evaporator, a compressor, a condensator and an expansion valve, wherein the cooling capacity and the working point of the evaporator are controlled by comparing the target values and the actual values of suitable control variables related to the opening degree of the expansion valve. In order to improve the controlling the linking of the control values is compensated by decoupling means with predetermined decoupling functions, when the control values are determined from the respective deviation of the control values from their respective target values.

XP-7910030, "FORUM, das Küba Magazin für Fach-Kompetenz in der Kältetechnik", issue 3/99, November 1999, pages 2 to 4 "Sie fragen - wir antworten" teaches to control the relative target superheat to be a fraction of between e.g. 0.5 and 0.7.

Accordingly, its an object of the present invention to provide a method for controlling superheat in a refrigeration circuit which can easily follow changes in the refrigeration circuit's operation conditions, and to provide a refrigeration circuit having a corresponding superheat control.

In accordance with an embodiment of the present invention, this object is solved by a method for controlling superheat of the refrigerant leaving anevaporator of a refrigeration circuit, wherein the refrigerant is heated within the evaporator against a secondary medium, comprising the following steps:
(a) measuring system parameters which are indicative for the actual condition within the evaporator;
(b) determining a temperature difference value indicative for the temperature difference between the refrigerant without superheat and the secondary medium at the refrigerant outlet of within the evaporator based on such measured parameters;
(c) calculating the relative target superheat as a fraction of the temperature difference value; and
(d) controlling the system based on the calculated relative target superheat.

Accordingly, the present invention is based on the recognition that it is not necessary to empirically approximate the minimum superheat within the system. Instead, the present invention calculates the minimum superheat based on the actual system condition. Accordingly, there is no delay in regulating down the superheat, once the refrigeration circuit is working stable, for example after the occurrence of any change in its operation conditions. The control calculates the superheat value and controls the system accordingly. It is even possible for the control to calculate superheat values while the refrigeration circuit is in a transition from a first to a second operating condition and control the superheat already on the basis of such transitional superheat value. In consequence, the system may virtually be at all times working with an optimized or nearly optimized superheat with the result of good refrigerant filling condition of the evaporator, the corresponding good heat transfer coefficient for the evaporator, and the corresponding low power consumption of the refrigeration circuit.

It is a further advantage that it turned out that the present control is equally well working for evaporators of completely different constructions, more or less independent from the refrigerant and the secondary medium, the refrigeration circuit in which it is installed as well as the ambient conditions, the relative flow direction of the refrigerant and the secondary medium, i.e. counterflow or parallel flow, in the evaporator, etc..

Thus, the present control is also applicable for a transcritical refrigerant, like CO2. With such an application the pressure within the evaporator can be subcritical, with a two-phase refrigerant being present during operation within the evaporator and the fluid portion thereof being evaporated. The hight pressure side, including the heat-rejecting heat exchanger which is typically termed "gascooler" in a transcritical refrigeration circuit and extending to the expansion means, can have an operational pressure which is supercritical or subcritical.

The temperature difference value as determined in step (b) can be indicative for the temperature difference between the refrigerant without superheat and the secondary medium at or near the location of the refrigerant outlet of the evaporator.

By using a timely varying fraction it is possible to gradually change the superheat while transitioning from a first condition to a second condition.

It is possible to calculate the relative target superheat by using a fraction of between 0.1 and 0.9 times, between approximately 0.3 and 0.8 times and particularly between approximately 0.4 and 0.6 times the temperature difference value at the refrigerant outlet of the evaporator. Particularly, the inventor has observed that there is a relatively sharp transition from stable to unstable operation condition independent from the operation condition of the refrigeration circuit so that at least for a particular application it is possible to give a fixed fraction of the temperature difference in the evaporator independent of the working conditions thereof. Moreover, this fraction appears to be more or less independent from the actual evaporator, the refrigerant and the secondary medium, the ambient conditions and the refrigeration circuit within which the respective evaporator is used, etc.. It further appears that the fraction is generally around 0.5, i.e. theoretically the optimum superheat is approximately one half of the temperature difference between the refrigerant without superheat and the secondary medium at the refrigerant outlet of the evaporator. It is, however, still advantageous as compared with the control of the prior art if the superheat is controlled based on a fraction which is less than the theoretically optimum fraction.

It is possible to measure in step (a) the secondary medium inlet temperature and the pressure of the saturated steam, for example at the refrigerant outlet of the evaporator. Moreover, it is possible to determine the evaporation temperature of the refrigerant based on the pressure of the saturated steam. There might exist some pressure losses in the system which do, however, normally not result in a great difference for the actual evaporation temperature. It is also possible to measure pressure of the saturated steam at any location of the evaporator or adjacent thereto and to take into account such pressure losses in the system. The temperature value indicative for the maximum temperature difference within the evaporator can be calculated as the difference between the secondary medium inlet temperature and the thus derived evaporation temperature of the refrigerant.

Preferably, the actual superheat in the system is regulated by way of determining the actual superheat, preferably as the difference of the secondary medium temperature at the refrigerant outlet side of the evaporator and the evaporation temperature of the refrigerant, and by controlling the amount of refrigerant entering the evaporator so as to maintain the calculated relative superheat.

It is possible to monitor the relative superheat in the system and reduce the relative superheat to a predetermined lower value, if the measured relative superheat is above a predetermined high value for a time period which is longer than a predetermined time period. Practically, in such a system relative large temperature differences may occur with the correspondingly hight relative superheat as determined according to the inventive method. It is known that superheat of more than approximately 7K over an extended time period may result in oil transport problems within the evaporator. In such a situation oil may accumulate in the evaporator and affect the heat transport conditions therein. An accumulation of oil can be prevented by reducing the relative superheat for a relatively short time substantially below the predetermined high value.

The present invention further relates to a refrigeration circuit, comprising in flow direction a compressor, a heat-rejecting heat exchangers, i.e. a condenser or a gascooler, a controllable expansion valve and an evaporator, the refrigeration circuit further comprises sensors for measuring system parameters which are indicative for the actual situation within the evaporator and a control which is connected to the sensors and to the controllable expansion valve, wherein the control is adapted to determine a temperature value indicative for the maximum temperature difference within the evaporator based on the measured parameters, to calculate a relative target superheat as a fraction of the temperature value for the maximum temperature difference, and to control the system based on the calculated relative target superheat.

Moreover, the control is adapted to calculate the relative target superheat as a constant fraction of the temperature value indicative for the maximum temperature difference. A constant fraction can be used for all operating conditions of a particular refrigeration circuit and evaporator, respectively.

The control can be adapted to calculate the relative target superheat by multiplying the temperature value indicative for the maximum temperature difference by a fraction of between 0.1 and 0.9 times, between approximately 0.3 and 0.8 times, and particularly between approximately 0.4 and 0.6 times.

The sensors in the system may comprise a secondary medium temperature sensor located at the refrigerant outlet side, a saturated steam pressure sensor and a refrigerant exit temperature sensor. The sensors can be connected to the control so as to supply respective sensor signals thereto. If the secondary medium is condensing within the evaporator, it is also possible to determine the secondary medium temperature from the evaporation pressure thereof. Generally, be it the refrigerant or a secondary medium which condensates within the evaporator, it is possible to measure the evaporation temperature at any location in or adjacent to the evaporator where evaporation takes place, i.e. at the respective medium inlet or at any position within the evaporator with the exception of the superheat zone where the respective medium is superheated. Thus, it is possible to directly measure the evaporation temperature with a temperature sensor positioned at respective positions within or adjacent to the evaporator, instead or additionally to deriving the evaporation temperature from the measurement signals of the saturated steam pressure sensor.

The control can be adapted to determine the evaporation temperature of the refrigerant based on the signal of the saturated steam pressure sensor and to determine the temperature difference by subtracting the evaporation temperature of the refrigerant from the secondary medium temperature at the refrigerant outlet side of the evaporator. Particularly, a look-up table can be stored in the control which indicates for a particular refrigerant the evaporation temperature based on the saturated steam pressure. Such a look-up table may also be modified by correction in order to take into account any changes due to the system, like pressure losses, etc.

The control can be adapted to determine the actual superheat, for example as a difference of the exit temperature of refrigerant leaving the evaporator and the evaporation temperature of the refrigerant and to control the extension valve soas to control the amount of refrigerant entering the evaporator to maintain the calculated or target relative superheat.

One embodiment of the present invention further relates to a refrigeration device comprising a refrigeration circuit in accordance with the present invention. The refrigeration circuit and accordingly desired refrigeration devices can be used for example for supermarket or industrial refrigeration. It is also possible to use the same for house hold refrigeration, for heating devices, car and building air-conditioners, etc.
Embodiments of the present invention are described in greater detail below with reference to the figures, in which:
- Fig. 1: shows a refrigeration circuit in accordance with an embodiment of the present invention;
- Fig. 2: is a diagram showing exemplary temperature conditions within the evaporator operated in counterflow direction; and
- Fig. 3: is a diagram similar to that of Fig. 2 but with the evaporator operated in parallel flow direction.

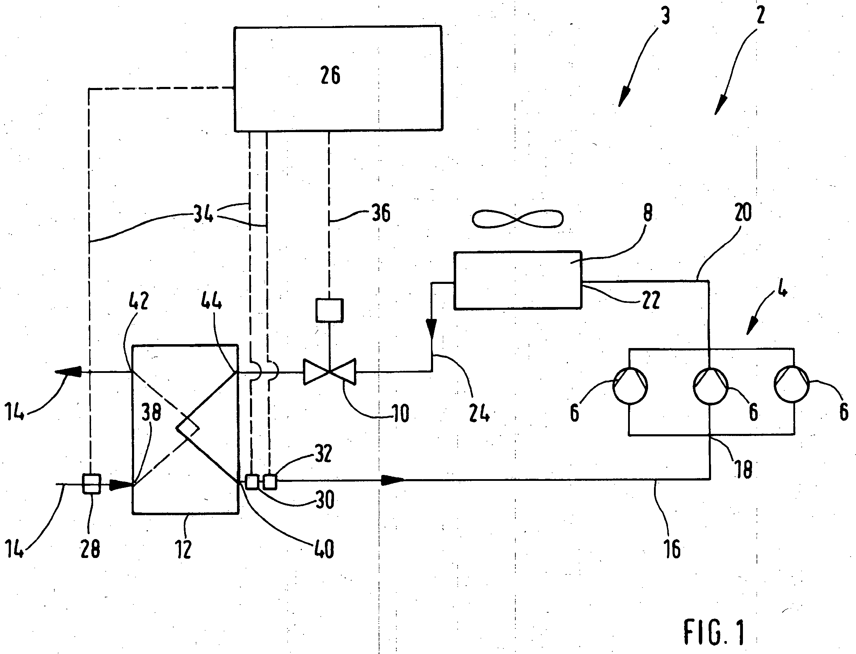

In Fig. 1 a refrigeration circuit 2 is shown for circulating a refrigerant in a predetermined flow direction. The refrigeration circuit 2 is shown schematically and as an example only. The refrigeration circuit 2 is a conventional refrigeration circuit using a conventional refrigerant. Alternatively, any other refrigeration circuit, like a transcritical refrigeration circuit for transcritical refrigerant like CO2 could incorporate the invention. The refrigeration circuit 2 comprises in flow direction a compressor set 4 comprising a plurality of individual compressors 6, a condenser 8, a controllable expansion means, for example an expansion valve 10 and an evaporator 12. Instead of the single evaporator 12 a plurality of evaporators 12 can be provided and each evaporator 12 may comprise its own controllable expansion means. Within the evaporator 12 the refrigerant is evaporated and heated against a secondary medium, the flow of which is indicated by arrows 14. At the same time, the secondary medium is cooled down and can be used as a coolant within a supermarket refrigeration display, etc. The refrigerant is not only evaporated in the evaporator 12 but also superheated to some extent, i.e. the temperature is raised above the evaporation temperature in order to provide dry suction gas through suction line 16 to the inlet 18 of the compressor set 4. As conventional, the gaseous refrigerant is compressed within the compressors 6 to a higher pressure and temperature level and fed through a hot gas line 20 to an inlet 22 of the condenser 8. Within the condenser 8, the fluid is cooled, for example against ambient air and liquefied so that high pressure, liquid refrigerant is fed through liquid line 24 to the controllable expansion valve 10.

Normally, the refrigeration circuit 2 is continuously controlled for example by switching on and off individual compressors of a plurality of compressors 6 or even the only compressor 6 if a single compressor is present in the refrigeration circuit 2 only. Different cooling requirements due to different ambient conditions, opening, closing of doors of a refrigeration device, etc. or even de-icing operation ,performed on an evaporator 12, will cause such changes in the operation condition of the refrigeration circuit 2. Each such changes might require a re-set--ting of the superheat, if the superheat is controlled.

The refrigeration circuit 2 further comprises a control 26 and plurality of sensors 28, 30 and 32: Particularly, the sensors comprise a secondary medium inlet temperature sensor 28, a saturated steam pressure sensor 30, a refrigerant exit temperature sensor 32. The sensors 28, 30, 32 deliver their respective sensor signals, for example through lines 34 to the control 26 which in turn is providing control signals, for example through line 36, to the controllable expansion means 10. The controllable expansion means can be an electronic expansion valve (EEV). The control 26 is preferably the Linde control UA300E. The control 26 can control the complete system. To this effect a plurality of further sensors can be positioned at different locations of the refrigeration circuit 2 and within the refrigeration device, respectively. Fig. 1 shows only those sensors which are relevant for the superheat control of this embodiment.

It is also possible to implement the superheat control 26 separately from the refrigeration circuit's 2 main control, for example within the controllable expansion device 10.

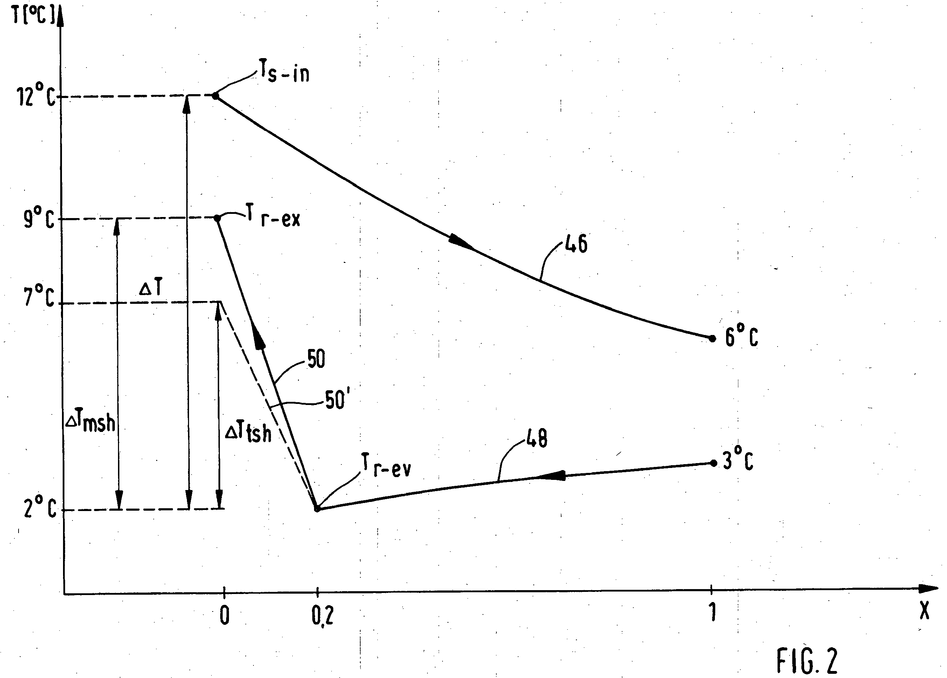

In Fig. 2, the flow and temperature conditions within the evaporator 12 which is operated in counterflow direction are given as an example. On the horizontal axis the relative exchanger length x within the evaporator is shown to be between 0 and 1 with "0" being more or less the secondary medium inlet 38 and the refrigerant outlet 40, respectively, and "1" being more or less the secondary medium exit 42 and the refrigerant inlet 44, respectively. Accordingly, in the evaporator 12, the secondary medium and the refrigerant are in counterflow relationship. The vertical axis defines the temperature T of the refrigerant and the secondary medium. The secondary medium can be ambient air, water, etc., it can condensate within or at the evaporator 12, evaporate or can even be in a transcritical or supercritical condition. The upper curve 46 represents the secondary medium temperature over the heat exchanger distance x, while the lower curve 48 represents the temperature of the refrigerant over the same distance x.

As can be seen, the liquid refrigerant starting with 3°C at the refrigerant inlet 44 evaporates and cools down over a substantial distance of the heat exchanger distance until it reaches its lower most temperature value of 2°C at a fraction of approximately 0.2 or 20 % of the heat exchanger distance. Beginning at this location, the temperature of the gaseous refrigerant starts to increase and this portion 50 of the refrigerant curve 48 is the superheating portion thereof. As shown in Fig. 2, the measured superheat ΔTmsh is the difference between the refrigerant exit temperature of 9°C and the lower most value of 2°C, i.e. 7K. While heating the refrigerant, the secondary medium cools down from 12°C to 6°C as shown by curve 46. Fig. 2 further shows significant temperatures within the system, for example the evaporation temperature of the refrigerant Tr-ev, the exit temperature of the refrigerant Tr-ex and the inlet temperature of the secondary medium Ts-in.

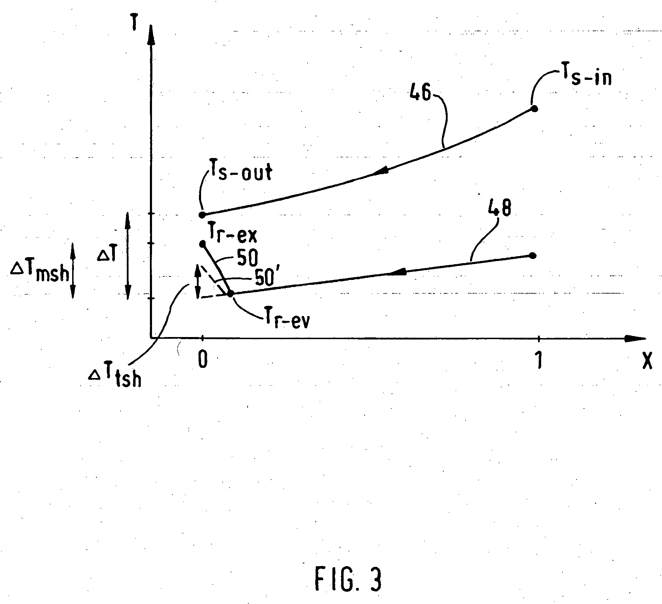

The control 26 receives the respective temperature and pressure values from the sensors 28, 30 and 32 and calculates a calculated relative target superheat ΔTtsh on the basis of such actual refrigeration circuit parameters. Particularly the control 26 sets the calculated relative target superheat ΔΔtsh to be a constant fraction of the temperature difference in the system ΔT. In the example of Fig. 2 and 3, the temperature difference ΔT is the temperatur difference at the refrigerant outlet 40 of the evaporator 12 and it is calculated by subtracting the evaporation temperature of the refrigerant Tr-ev (as derived from the saturated steam pressure sensor measurement 30) from the inlet temperature of the secondary medium Ts-in. The fraction is set to be 1/2 so that the calculated relative target superheat ΔTtsh is 5K as compared to the measured superheat ΔTmsh of 7K. Accordingly, the condition in the system could be controlled to such lower superheat ΔTtsh and superheat curve 50' as shown in Fig. 2 with an interrupted line.

Moreover, the temperatures stability in the refrigeration circuit 2 and the refrigeration device 3, respectively, can substantially be increased by the present control as can be seen in the following example. If, for example due to shut down of a compressor 6 in the system, the air back pressure from the compressor is increased so that the evaporation temperature increases by 2K, the total temperature difference decreases by such 2°C and will result - provided we take the factor of 1/2 as used in the embodiment of Fig. 2 - in a reduction of the set point for the relative target superheat by 1 K. Accordingly, the new set point is merely 1K away from the previous set point, but not the 2K away from the previous set point as it would have been the case using standard superheat control. Accordingly, the reduction of opening degree of the expansion valve will be lower, the injection is more regular, the refrigerant filling is optimized and in consequence, the rise of the secondary medium exit temperature and correspondingly the temperature within the refrigerant device is lower.

The representation of Fig. 3 corresponds by and large to that of Fig. 2, like reference numerals designate the same or similar elements, and the disclosure as given in respect to the embodiment of Fig. 2 is generally likewise applicable to the embodiment of Fig. 3. The main difference between such Figures is that the refrigerant and the secondary medium are in parallel flow relationship in the evaporator 2 of Fig. 3 so that the refrigerant and the secondary medium both cool down while moving towards the evaporator outlets 40 and 42 of the evaporator 2 at the left side in the representation of Fig. 3.

As can be seen in the representations of Fig. 2 and 3, the temperatures of the refrigerant and the secondary medium are given curves which depend on the characteristics of the refrigerant and the secondary medium, the characteristics of the evaporator and its material, etc.. Thus, based on the knowledge of the characteristics it is possible to control the superheat based on any temperature difference between the temperature of the refrigerant without superheat and the temperature of the secondary medium within the evaporator 12, since the knowledge will allow for a corresponding adaptation of the fraction of the temperature difference which is used for calculating the target superheat ΔTtsh. Practically, the temperature difference value ΔT will be determined based on values measured at or near the inlet or outlets of the evaporator 12.

## Claims

1. Method for controlling superheat of the refrigerant leaving a refrigerant outlet (40) of an evaporator (12) of a refrigeration circuit (2), wherein the refrigerant is heated within the evaporator (12) against a secondary medium, comprising the following steps:
(a) measuring system parameters which are indicative for the actual operating condition within the evaporator (12);
(b) determining a temperature difference value (AT) indicative for the temperature difference between the refrigerant without superheat and the secondary medium within the evaporator (12) based on such measured parameters;
(c) calculating the relative target superheat (ΔTₜₛₕ); and
(d) controlling the system based on the calculated relative target superheat (ΔTₜₛₕ),
**characterized in that**
the relative target superheat (ΔTₜₛₕ) is calculated as a timely varying fraction of the temperature difference value (ΔT).

2. Method according to claim 1, wherein the secondary medium temperature at the refrigerant outlet side of the evaporator (12) (Ts-in; Ts-out) and the pressure of the saturated steam (Pst) are measured in step (a).

3. Method according to claim 2, wherein the evaporation temperature of the refrigerant is determined based on the pressure of the saturated steam (Pst) and the temperature difference value (ΔT) is the difference between the secondary medium temperature (Ts-in; Ts-out) at the outlet side of the refrigerator (12) and the evaporation temperature of the refrigerant (Tr-ev).

4. Method according to any of claims 1 to 3, further comprising in step (d) determining the actual superheat as the difference of the exit temperature (Tr-ex) of refrigerant leaving the evaporator (12) and the evaporation temperature of the refrigerant (Tr-ev) and controlling the amount of refrigerant entering the evaporator (12) so as to maintain the calculated relative superheat.

5. Method according to any of claims 1 to 4, further comprising the step of monitoring the superheat (ΔTmsh) in the system and reducing the superheat (ΔTmsh) to a predetermined lower value, if the measured superheat is above a predetermined value for a time period which is longer than a predetermined time period.

6. Refrigeration circuit (2) comprising in flow direction a compressor (6), a heat rejecting heat exchanger (8), a controllable expansion means (10) and an evaporator (12) having a refrigerant outlet (40), the refrigeration circuit (2) further comprises sensors (28, 30, 32) for measuring system parameters which are indicative for the actual operating condition within the evaporator (12) and a control (26) which is connected to the sensors (28, 30, 32) and to the controllable expansion means (10), wherein the control (26) is adapted to determine a temperature difference value (AT) indicative for the temperature difference between the refrigerant without superheat and the secondary medium within the evaporator (12) based on the measured parameters, to calculate a relative target superheat (ΔTₜₛₕ), and to control the system based on the calculated relative target superheat (ΔTₜₛₕ),
**characterized in that**
the control (26) is adapted to calculate the relative target superheat (ΔTₜₛₕ) as a timely varying fraction of the temperature difference value (AT).

7. Refrigeration circuit (2) according to claim 6, wherein the sensors (28, 30, 32) comprise a secondary medium temperature sensor (28) at the outlet side of the refrigerator (12), a saturated steam pressure sensor (30) and a refrigerant exit temperature sensor (32).

8. Refrigeration circuit (2) according to claim 7, wherein the control (26) is adapted to determine the evaporation temperature of the refrigerant based on the signal of the saturated steam pressure sensor (30) and to determine the temperature difference value (AT) by subtracting the evaporation temperature of the refrigerant (Tr-ev) from the secondary medium temperature (Ts-in; Ts-out) at the outlet side of the refrigerator (12).

9. Refrigeration circuit (2) according to any of claims 6 to 8, wherein the control (26) is further adapted to determine the actual superheat as the difference of the exit temperature (Tr-ex) of refrigerant leaving the evaporator (12) and the evaporation temperature of the refrigerant (Tr-ev) and to control the amount of refrigerant entering the evaporator (12) so as to maintain the calculated relative superheat.

10. Refrigeration circuit (2) according to any of claims 6 to 9, wherein the control (26) is further adapted to monitor the superheat (ΔTmsh) in the system and reducing the superheat (ΔTmsh) to a predetermined lower value, if the measured superheat (ΔTmsh) is above a predetermined value for a time period which is longer than a predetermined time period.

11. Refrigeration device (3) comprising a refrigeration circuit (2) in accordance with any of claims 6 to 10.

## Patentansprüche

1. Verfahren zur Regelung der Überhitzung des Kältemittels, das einen Kältemit - telauslass (40) eines Verdampfers (12) eines Kältekreislaufs (2) verlässt, wobei das Kältemittel im Verdampfer (12) gegen ein Sekundärmedium erhitzt wird, die folgenden Schritte umfassend:
(a) Messen von Systemparametern, die den tatsächlichen Betriebszustand in dem Verdampfer (12) angeben;
(b) Bestimmen eines Temperaturunterschiedswertes (ΔT), der den Temperaturunterschied zwischen dem Kältemittel ohne Überhitze und dem Sekundärmedium im Verdampfer (12) basierend auf solchen gemessenen Parametern angibt;
(c) Berechnen der relativen Zielüberhitze (ΔTₜₛₕ); und
(d) Regeln des Systems basierend auf der berechneten relativen Zielüberhitze (ΔTₜₛₕ),
**dadurch gekennzeichnet, dass**
die relative Zielüberhitze (ΔTₜₛₕ) als zeitlich variierender Bruchteil des Temperaturunterschiedswertes (ΔT) berechnet wird.

2. Verfahren nach Anspruch 1, wobei die Temperatur des Sekundärmediums an der Kältemittelauslassseite des Verdampfers (12) (Ts-in; Ts-out) und der Druck des gesättigten Dampfes (Pst) in Schritt (a) gemessen werden.

3. Verfahren nach Anspruch 2, wobei die Verdampfungstemperatur des Kältemit-tels basierend auf dem Druck des gesättigten Dampfes (Pst) bestimmt wird und der Temperaturunterschiedswert (ΔT) der Unterschied zwischen der Temperatur des Sekundärmediums (Ts-in; Ts-out) an der Auslassseite der Kühlanlage (12) und der Verdampfungstemperatur des Kältemittels (Tr-ev) ist.

4. Verfahren nach einem der Ansprüche 1 bis 3, weiter umfassend in Schritt (d) das Bestimmen der tatsächlichen Überhitze als Unterschied zwischen der Austritt-stemperatur (Tr-ex) von Kältemittel, das den Verdampfer (12) verlässt und der Verdampfungstemperatur des Kältemittels (Tr-ev) und das Regeln der Menge an Kältemittel, das in den Verdampfer (12) eintritt, um die berechnete relative Überhitze aufrechtzuhalten.

5. Verfahren nach einem der Ansprüche 1 bis 4, weiter umfassend den Schritt des Beobachtens der Überhitze (ΔTmsh) im System und Reduzierens der Überhitze (ΔTmsh) auf einen zuvor festgelegten niedrigeren Wert, falls die gemessene Überhitze über einen Zeitraum, der länger als ein zuvor festgelegter Zeitraum ist, über einem zuvor festgelegten Wert liegt.

6. Kältekreislauf (2), umfassend in Flussrichtung einen Kompressor (6), einen hitzeabweisenden Wärmetauscher (8), ein regelbares Erweiterungsmittel (10) und einen Verdampfer (12) mit einem Kältemittelauslass (40), wobei der Kältekreislauf (2) weiter Sensoren (28, 30, 32) zum Messen von Systemparametern, die den tat - sächlichen Betriebszustand im Verdampfer (12) angeben und einen Regler (26), der mit den Sensoren (28, 30, 32) und mit dem regelbaren Erweiterungsmittel (10) verbunden ist, umfasst, wobei der Regler (26) angepasst ist, um einen Tem - peraturunterschiedswert (ΔT) zu bestimmen, der den Temperaturunterschied zwi - schen dem Kältemittel ohne Überhitze und dem Sekundärmedium im Verdampfer (12) basierend auf den gemessenen Parametern angibt, eine relative Zielüberhit - ze (ΔTₜₛₕ) zu berechnen und das System basierend auf der berechneten relativen Zielüberhitze (ΔTₜₛₕ) zu regeln,
**dadurch gekennzeichnet, dass**
der Regler (26) angepasst ist, um die relative Zielüberhitze (ΔTₜₛₕ) als zeitlich variierenden Bruchteil des Temperaturunterschiedswertes (ΔT) zu berechnen.

7. Kältekreislauf (2) nach Anspruch 6, wobei die Sensoren (28, 30, 32) einen Se - kundärmediumtemperatursensor (28) an der Auslassseite der Kühlanlage (12), einen Drucksensor für den gesättigten Dampf (30) und einen Kältemittelaustritt - stemperatursensor (32) umfassen.

8. Kältekreislauf (2) nach Anspruch 7, wobei der Regler (26) angepasst ist, um die Verdampfungstemperatur des Kältemittels basierend auf dem Signal des Druck - sensors für den gesättigten Dampf (30) zu bestimmen und den Temperaturunterschiedswert (ΔT) durch Subtrahieren der Verdampfungstemperatur des Kältemittels (Tr-ev) von der Temperatur des Sekundärmediums (Ts-in; Ts-out) an der Auslassseite der Kühlanlage (12) zu bestimmen.

9. Kältekreislauf (2) nach einem der Ansprüche 6 bis 8, wobei der Regler (26) wei - ter angepasst ist, um die tatsächliche Überhitze als Unterschied zwischen der Austrittstemperatur (Tr-ex) des Kältemittels, das den Verdampfer (12) verlässt, und der Verdampfungstemperatur des Kältemittels (Tr-ev) zu bestimmen und die Menge an Kältemittel, das in den Verdampfer (12) eintritt, zu regeln, um die be - rechnete relative Überhitze aufrechtzuhalten.

10. Kältekreislauf (2) nach einem der Ansprüche 6 bis 9, wobei der Regler (26) weiter angepasst ist, um die Überhitze (ΔTmsh) im System zu beobachten und die Überhitze (ΔTmsh) auf einen zuvor festgelegten niedrigeren Wert zu reduzie - ren, falls die gemessene Überhitze (ΔTmsh) über einen Zeitraum, der länger als ein zuvor festgelegter Zeitraum ist, über einem zuvor festgelegten Wert liegt.

11. Kältegerät (3), umfassend einen Kältekreislauf (2) in Übereinstimmung mit ei - nem der Ansprüche 6 bis 10.

## Revendications

1. Procédé pour le contrôle de la surchauffe du réfrigérant quittant une sortie de réfrigérant (40) d'un évaporateur (12) d'un circuit de réfrigération (2), dans lequel le réfrigérant est chauffé à l'intérieur de l'évaporateur (12) contre un milieu secondaire, comprenant les étapes suivantes :
(a) la mesure de paramètres de système qui sont indicatifs pour la condition de fonctionnement réelle à l'intérieur de l'évaporateur (12) ;
(b) la détermination d'une valeur de différence de température (ΔT) indicative de la différence de température entre le réfrigérant sans surchauffe et le milieu secondaire à l'intérieur de l'évaporateur (12) sur la base de tels paramètres mesurés ;
(c) le calcul de la surchauffe cible relative (ΔTₜₛₕ) ; et
(d) la commande du système sur la base de la surchauffe cible relative calculée (ΔTₜₛₕ),
**caractérisé en ce que**
la surchauffe cible relative (ΔTₜₛₕ) est calculée comme une fraction variant opportunément de la valeur de différence de température (ΔT).

2. Procédé selon la revendication 1, dans lequel la température du milieu secondaire sur le côté sortie de réfrigérant de l'évaporateur (12) (Ts-in ; Ts-out) et la pression de la vapeur saturée (Pst) sont mesurées dans l'étape (a).

3. Procédé selon la revendication 2, dans lequel la température d'évaporation du réfrigérant est déterminée sur la base de la pression de la vapeur saturée (Pst) et la valeur de différence de température (ΔT) est la différence entre la température du milieu secondaire (Ts-in ; Ts-out) sur le côté sortie du réfrigérateur (12) et la température d'évaporation du réfrigérant (Tr-ev).

4. Procédé selon l'une quelconque des revendications 1 à 3, comprenant en outre dans l'étape (d) la détermination de la surchauffe effective comme la différence de la température de sortie (Tr-ex) du réfrigérant quittant l'évaporateur (12) et de la température d'évaporation du réfrigérant (Tr-ev) et la commande de la quantité de réfrigérant entrant dans l'évaporateur (12) de manière à maintenir la surchauffe relative calculée.

5. Procédé selon l'une quelconque des revendications 1 à 4, comprenant en outre l'étape de surveillance de la surchauffe (ΔTmsh) dans le système et de réduction de la surchauffe (ΔTmsh) à une valeur inférieure prédéterminée, si la surchauffe mesurée est au-dessus d'une valeur prédéterminée pendant une période de temps qui est supérieure à une longueur de temps prédéterminée.

6. Circuit de réfrigération (2) comprenant dans la direction d'écoulement un compresseur (6), un échangeur de chaleur rejetant la chaleur (8), un moyen de détente pouvant être commandé (10) et un évaporateur (12) ayant une sortie de réfrigérant (40), le circuit de réfrigération (2) comprenant en outre des capteurs (28, 30, 32) pour mesurer des paramètres de système qui sont indicatifs pour la condition de fonctionnement effective à l'intérieur de l'évaporateur (12) et une commande (26) qui est connectée aux capteurs (28, 30, 32) et au moyen de détente pouvant être commandé (10), dans lequel la commande (26) est adaptée pour déterminer une valeur de différence de température (ΔT) indicative de la différence de température entre le réfrigérant sans surchauffe et le milieu secondaire à l'intérieur de l'évaporateur (12) sur la base des paramètres mesurés, pour calculer une surchauffe cible relative (ΔTₜₛₕ) et pour commander le système sur la base de la surchauffe cible relative calculée (ΔTₜₛₕ),
**caractérisé en ce que**
la commande (26) est adaptée pour calculer la surchauffe cible relative (ΔTₜₛₕ) comme une fraction variant opportunément de la valeur de différence de température (ΔT).

7. Circuit de réfrigération (2) selon la revendication 6, dans lequel les capteurs (28, 30, 32) comprennent un capteur de température du milieu secondaire (28) sur le côté sortie du réfrigérateur (12), un capteur de pression de vapeur saturée (30) et un capteur de température de sortie de réfrigérant (32).

8. Circuit de réfrigération (2) selon la revendication 7, dans lequel la commande (26) est adaptée pour déterminer la température d'évaporation du réfrigérant sur la base du signal du capteur de pression de vapeur saturée (30) et pour déterminer la valeur de différence de température (ΔT) en soustrayant la température d'évaporation du réfrigérant (Tr-ev) de la température du milieu secondaire (Ts-in ; Ts-out) sur le côté sortie du réfrigérateur (12).

9. Circuit de réfrigération (2) selon l'une quelconque des revendications 6 à 8, dans lequel la commande (26) est adaptée en outre pour déterminer la surchauffe effective comme la différence de la température de sortie (Tr-ex) du réfrigérant quittant l'évaporateur (12) et de la température d'évaporation du réfrigérant (Tr-ev) et pour commander la quantité de réfrigérant entrant dans l'évaporateur (12) de manière à maintenir la surchauffe relative calculée.

10. Circuit de réfrigération (2) selon l'une quelconque des revendications 6 à 9, dans lequel la commande (26) est adaptée en outre pour surveiller la surchauffe (ΔTmsh) dans le système et réduire la surchauffe (ΔTmsh) à une valeur inférieure prédéterminée, si la surchauffe mesurée (ΔTmsh) est au-dessus d'une valeur prédéterminée pendant une période de temps qui est supérieure à une longueur de temps prédéterminée.

11. Dispositif de réfrigération (3) comprenant un circuit de réfrigération (2) selon l'une quelconque des revendications 6 à 10.
